# EUROPÄISCHE PATENTSCHRIFT

(11) **EP 3 784 440 B1**
(45) Veröffentlichungstag und Bekanntmachung des Hinweises auf die Patenterteilung: **30.11.2022**
(21) Anmeldenummer: 19721238.4
(22) Anmeldetag: 25.04.2019
(51) Int. Cl.: B25B 7/22, B23D 29/02

(54) **ZANGE**
PLIERS
PINCE

(30) Priorität: 26.04.2018 DE 102018110107
(43) Veröffentlichungstag der Anmeldung: 03.03.2021
(73) Patentinhaber: Knipex-Werk C. Gustav Putsch KG, 42349 Wuppertal (DE)
(72) Erfinder: LIEDTKE, Tim, 42653 Solingen (DE)
(74) Vertreter: Müller, Enno
(86) Internationale Anmeldenummer: PCT/EP2019/060598
(87) Internationale Veröffentlichungsnummer: WO 2019/207034

(56) Entgegenhaltungen:
- DE-A1- 2 162 818
- JP-A- H0 825 232
- US-A- 2 957 242

## Beschreibung

### Gebiet der Technik

Die Erfindung betrifft zunächst eine Zange nach den Merkmalen des Oberbegriffes des Anspruches 1.

### Stand der Technik

Zangen der in Rede stehenden Art sind bekannt. So wird beispielsweise auf die DE 21 62 818 A verwiesen, aus welcher Patentanmeldung eine Mehrzweckzange bekannt ist, aufweisend eine Mehrzahl in ihrer Größe abgestufter Ausnehmungen in Form von Schneidöffnungen. Diese Schneidöffnungen sind im Überdeckungsbereich der Zangenschenkel in eine fluchtende Übereinanderlage bringbar. Zum Schneiden von Bolzen, beispielsweise Gewindebolzen, wird durch übliche Schwenkverlagerung der Zangenschenkel zueinander über die ersten und zweiten Ausnehmungen eine Scherwirkung auf den Bolzen erreicht.

Zum Abscheren von Gewindebolzen ist es in diesem Zusammenhang weiter bekannt, zumindest eine der Ausnehmungen mit einem entsprechenden Innengewinde auszubilden.

Aus der US 2957242 A ist eine Zange gemäß dem Oberbegriff des Anspruchs bekannt, bei welcher in einer ersten Ausnehmung, zugeordnet der Trennebene ein im Querschnitt keilartiger Vorsprung, mit zunehmender Dicke über einen Umfangswinkel, und sich erstreckend über den gesamten Umfang, ausgebildet ist. Dieser Vorsprung begrenzt den Durchsteckbereich für einen Gewindebolzen von vornherein. Aus der JP H08 25232 A ist eine Zange bekannt, bei welcher die erste Ausnehmung über einen gesamten Umfang bei fluchtender zylindrischer Ausgestaltung der Gewindeausformung mit der zylindrischen Ausnehmung im Übrigen eine Gewindeausformung mit mehreren Gewindegängen, die sich über den gesamten Umfang der Ausnehmung erstrecken, aufweist. Aus der DE 21 62 818 A1 ist eine Zange mit Bolzenschneidöffnungen bekannt, die gewindefrei ausgebildet sind.

### Zusammenfassung der Erfindung

Ausgehend von dem dargelegten Stand der Technik, insbesondere in Bezug auf die US 2957242 A, stellt sich der Erfindung die Aufgabe eine Zange mit einer Ausbildung zur Abtrennung eines Gewindebolzens anzugeben, die eine günstige Handhabbarkeit und/oder eine vorteilhafte Langlebigkeit ermöglicht.

Diese Aufgabe ist beim Gegenstand des Anspruches 1 gelöst, wobei darauf abgestellt ist, dass zwei umfangsmäßig gegenüberliegende und höhenmäßig versetzte Gewindeausformungen vorgesehen sind, dass die Gewindeausformungen nur über einen Teil des inneren Umfangs der ersten Ausnehmung ausgebildet sind und dass die Gewindeausformungen bezüglich eines Gewindegrundes in Ausrichtung der Drehachse verlaufen.

Zufolge dieser Ausgestaltung ist insbesondere eine handhabungstechnische Verbesserung gegeben. Ein abzuscherender Gewindebolzen ist zufolge der vorgeschlagenen Ausgestaltung in handhabungstechnisch günstiger Weise in die nur gewünschte Abscherposition einsetzbar. Der Schraubbolzen wird hierbei über die teilweise ausgebildeten Gewindeausformungen im Bereich der ersten Ausnehmung erfasst.

Diese Gewindeausformungen können sich mit Bezug auf die im Wesentlichen in Richtung der Drehachse betrachtete Dickenrichtung des diesbezüglichen Zangenschenkels über weniger als 50 Prozent dieser Ausnehmungslänge erstrecken, weiter bevorzugt weiter weniger als 25 oder 20 Prozent. So kann in einer möglichen Ausgestaltung die Gewindeausformung sich über ein Zwanzigstel bis ein Fünftel, weiter beispielsweise etwa über ein Zehntel der Ausnehmungshöhe erstrecken.

Auch bezüglich des inneren Umfangs der ersten Ausnehmung sind diese Gewindeausformungen nur teilweise vorgesehen, so insbesondere über ein Achtel bis sieben Achtel des inneren Umfangs, weiter beispielsweise etwa über ein Viertel bis ein Halb.

Es ist bevorzugt, dass beide Ausnehmungen bezogen auf einen Querschnitt gegenüberliegend zu dem Abscherbereich der Randkante der anderen Ausnehmung mit einer entlang der Trennebene ausgerichteten Vertiefung versehen sind und dass die Vertiefungen bezogen auf einen Querschnitt gegenüberliegend ausgebildet sind, so dass die Schneidkanten bildende Randkanten der Ausnehmungen in jeder Zangenschenkel-Schwenkstellung freiliegen.

Bei den Vertiefungen kann es sich um eine geschmiedete Vertiefungen handeln.

Mit zunehmender Nutzung der Ausnehmungen zum Abscheren von Bolzen, kann es im Bereich der Randkanten der Ausnehmungen zu einem sogenannten Schneidenaufwurf kommen. Dies führt gegebenenfalls zu einer Beeinflussung der Gängigkeit der Zange. Durch die vorgeschlagene Ausgestaltung mit Anordnung von entlang der Trennebene ausgerichteten Vertiefungen ist dieser Problematik entgegengewirkt. Eine Vertiefung ist bevorzugt randkantenseitig einer Ausnehmung vorgesehen. Somit beeinflusst ein möglicher Schneidenaufwurf nicht mehr die Gängigkeit insbesondere beim Öffnen der Zange.

Die umfangsmäßig gegenüberliegenden Gewindeausformungen der ersten Ausnehmung können höhenmäßig versetzt vorgesehen sein, entsprechend mit einem in Erstreckungsrichtung der Ausnehmung betrachteten Abstand zueinander. So können beispielsweise die Gewindeausformungen jeweils den in Höhenrichtung betrachteten Endbereichen der ersten Ausnehmung zugeordnet vorgesehen sein.

Die erste Ausnehmung ist bevorzugt mit einer eine geometrische Zylinderlängsachse aufweisenden kreiszylindrischen Innenfläche gebildet.

Diese geometrische Zylinderlängsachse kann mit der geometrischen Drehachse der Zangenschenkel im Gelenkbereich in einer Projektion einen spitzen Winkel einschließen. Dieser spitze Winkel kann gemäß einer möglichen Ausgestaltung 5 bis 30°, weiter etwa 10 bis 20°, so beispielsweise etwa 15° betragen. Entsprechend verläuft die zylindrische Innenfläche der ersten Ausnehmung in einem spitzen Winkel zu der Trennebene.

Die Gewindeausformungen der ersten Ausnehmung verlaufen in Ausrichtung der Drehachse der Zangenschenkel. Zufolge dieser Ausgestaltung ist in Kombination mit der im spitzen Winkel ausgerichteten Innenfläche der ersten Ausnehmung das Einsetzen insbesondere eines abzuscherenden Gewindebolzens erleichtert. Dieser muss nicht, wie beim Stand der Technik bekannt, aufwendig über die gesamte Gewindelänge der ersten Ausnehmung in diese eingeschraubt und über diese hinaus zum Abscheren bewegt werden. Vielmehr kann ein solcher Schraubbolzen zufolge der vorgeschlagenen Lösung zunächst schräg, d.h. unter Einnahme eines spitzen Winkels der Bolzenlängsachse zu der Trennebene in die erste Ausnehmung geführt werden, dies entsprechend entlang der zylindrischen, bevorzugt gänzlich gewindefreien Innenfläche. Mit Erreichen der Einstecktiefe beziehungsweise mit Erreichen der gewünschten Abscherlänge wird durch Aufstellen des Gewindebolzens in eine senkrecht zur Trennebene und somit parallele Ausrichtung zur Drehachse gegebene Stellung der Eingriff der umfangsmäßig gegenüberliegenden und höhenmäßig zueinander distanzierten Gewindeausformungen der ersten Ausnehmung in das Außengewinde des Schraubbolzens erreicht.

Die zweite Ausnehmung kann zwei in einem Querschnitt, insbesondere in einem Längsquerschnitt entlang einer geometrischen, den diesbezüglichen Zangenschenkel in Dickenrichtung durchsetzenden Längsachse, unterschiedlich zueinander verlaufende Innenkanten aufweisen. In diesem Schnitt liegen diese Innenkanten gegenüber, wobei die Innenkanten insgesamt Teil einer umlaufenden Innenfläche der zweiten Ausnehmung sind.

Eine erste Innenkante der zweiten Ausnehmung kann in einer Projektion in Ausrichtung der Drehachse verlaufen beziehungsweise insgesamt im Wesentlichen senkrecht zu der Trennebene. So kann weiter entsprechend die erste Innenkante angepasst an die Ausrichtung der Gewindeausformungen in der ersten Ausnehmung verlaufen.

Die zweite Innenkante kann gemäß einer bevorzugten Ausgestaltung einen spitzen Winkel von etwa 10 bis 30° zu der Drehachse einschließen, weiter beispielsweise etwa 15 bis 20°. In einer bevorzugten Ausgestaltung kann der diesbezügliche spitze Winkel im Wesentlichen dem bezüglich der Ausrichtung der Zylinderlängsachse der ersten Ausnehmung im zylindrischen, gewindefreien Bereich entsprechen.

Auch kann die zweite Ausnehmung frei von Gewindeausformungen sein. Mit Abschluss des Abschervorganges kann so das abgescherte, im Bereich der zweiten Ausnehmung einliegende Bolzenteil gegebenenfalls aus der zweiten Ausnehmung fallen, während der bevorzugt auch einen Schraubenkopf oder dergleichen aufweisende, weiter zu nutzende Schraubbolzenteil zumindest in der senkrecht zur Trennebene ausgerichteten Stellung weiterhin in der ersten Ausnehmung über die Gewindeausformungen gehalten ist. Mit Verlagerung dieses Schraubbolzenteils in die spitzwinklige Stellung zu der Trennebene wird der Eingriff der Gewindeausformungen in das Schraubgewinde des Bolzens verlassen. Der Schraubbolzen kann hiernach in einfachster Weise aus der ersten Ausnehmung herausgezogen werden.

Bezüglich der im Abscherbereich vorgesehenen Vertiefung kann weiter vorgesehen sein, dass diese langlochartig gebildet ist. Entlang dieser langlochartigen Vertiefung kann die Randkante beziehungsweise Scherkante der gegenüberliegenden Ausnehmung im gegenüberliegenden Zangenschenkel kollisionsfrei verfahren.

In bevorzugter Ausgestaltung ist an beiden Ausnehmungen eine Vertiefung ausgebildet. Hierbei sind weiter bevorzugt die Vertiefungen bezogen auf einen Querschnitt gegenüberliegend ausgebildet, entsprechend mit ihren Öffnungen aufeinander zu weisend.

Angepasst an die Schwenkbeweglichkeit der Zangenschenkel um die Drehachse, über welche Drehbeweglichkeit auch der Abschervorgang eines in den beiden Ausnehmungen einliegenden Bolzens vorgenommen wird, erstreckt sich in bevorzugter Ausgestaltung jede Vertiefung bezogen auf die Drehachse zumindest im Wesentlichen entlang einer Kreislinie. Die in Erstreckungsrichtung betrachtete Länge einer jeden Vertiefung entspricht zumindest dem Maß des möglichen Verlagerungsweges der bezüglich der Trennebene gegenüberliegenden Randkante des Abscherbereiches aus der Bolzenaufnahmesituation bis hin in die Scherposition.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 10 bis 30° auch die Offenbarung von 10,1 bis 30°, 10 bis 29,9°, 10,1 bis 29,9° etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweiligen angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung eine Zange in Schließstellung, betreffend eine erste Ausführungsform;
- Fig. 2: eine Teildarstellung der Zange in Draufsicht;
- Fig. 3: die Rückansicht zu Figur 2;
- Fig. 4: den Schnitt gemäß der Linie IV-IV in Figur 2;
- Fig. 5: den Schnitt gemäß der Linie V-V in Figur 4, betreffend eine Bolzenaufnahmestellung;
- Fig. 6: den vergrößerten Schnitt gemäß der Linie VI-VI in Figur 5;
- Fig. 7: den Schnitt gemäß der Linie VII-VII in Figur 6;
- Fig. 8: den Schnitt gemäß der Linie VIII-VIII in Figur 6;
- Fig. 9: eine der Figur 6 entsprechende Schnittdarstellung, betreffend eine Folgedarstellung zu Figur 6 im Zuge eines Abschervorganges des Bolzens;
- Fig. 10: die Herausvergrößerung des Bereichs X in Figur 9;
- Fig. 11: eine der Figur 5 entsprechende Darstellung, jedoch betreffend die Zangenstellung nach Durchführung des Abschervorganges;
- Fig. 12: eine Folgedarstellung zu Figur 9, betreffend den durchgeführten Abschervorgang gemäß Figur 11;
- Fig. 13: in einer Teilansicht eine Zange in weiterer Ausführungsform, betreffend die Schließstellung;
- Fig. 14: in einer weiteren Teilansicht eine Zange in einer dritten Ausführungsform, ebenfalls betreffend die Schließstellung;
- Fig. 15: in Ansicht eine in Schließstellung befindliche Zangen in einer vierten Ausführungsform;
- Fig. 16: in einer fünften Ausführungsform eine weitere Zange in Ansicht, betreffend die Schließstellung.

### Beschreibung der Ausführungsformen

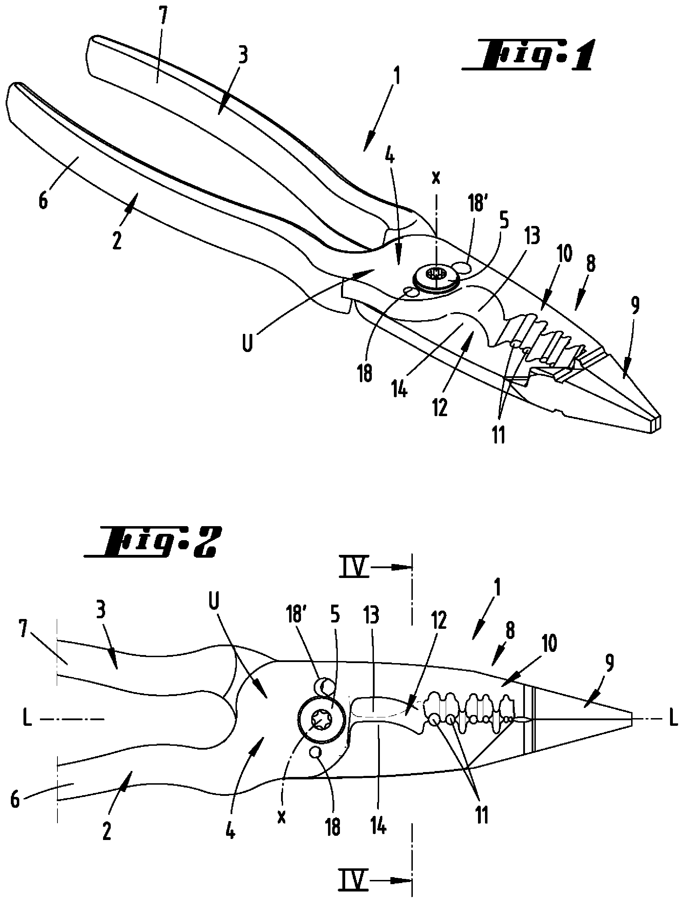

Dargestellt und beschrieben ist, zunächst mit Bezug zu Figur 1, eine Zange 1, die zwei, beispielsweise in Figur 2 nur teilweise dargestellte, Zangenschenkel 2 und 3 aufweist, die in einem Gelenkbereich 4 um eine geometrische Drehachse x drehbar zueinander gehaltert sind. Die geometrische Drehachse x ist gegeben durch einen die Zangenschenkel 2 und 3 in dem Gelenkbereich 4 durchsetzenden Gelenkbolzen 5.

Auf der einen Seite des Gelenkbereiches 4 bildet der erste Zangenschenkel 2 einen Griffbereich 6 und der zweite Zangenschenkel 3 einen Griffbereich 7 aus, während sich auf der anderen Seite des Gelenkbereiches 4 ein Zangenmaul 8 bildet.

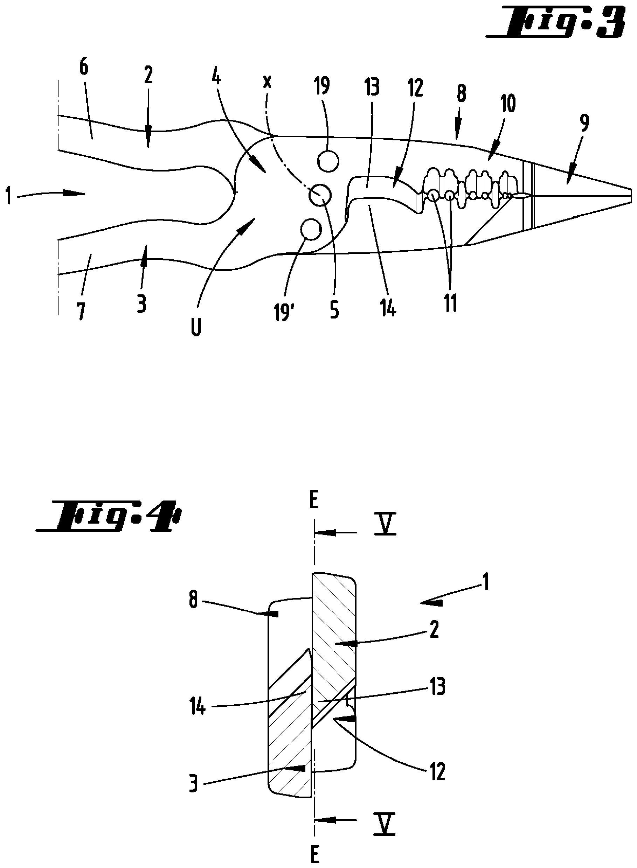

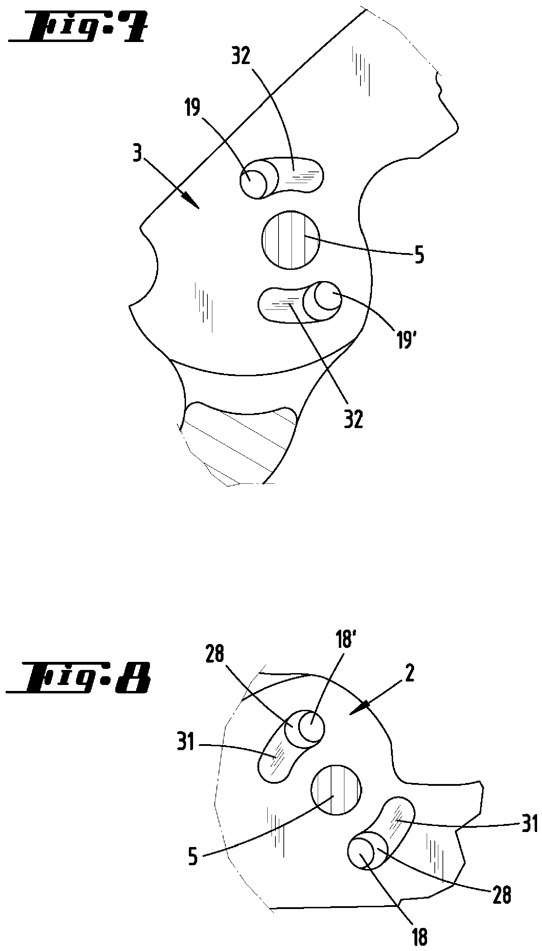

Das Zangenmaul 8 kann im Einzelnen gemäß dem in den Figuren 1 bis 12 dargestellten ersten Ausführungsbeispiel hintereinander, d.h. bezogen auf eine Längslinie L-L nacheinander, ausgebildete unterschiedliche Wirkbereiche aufweisen. So kann spitzenseitig, d.h. zugeordnet den freien Enden der Zangenschenkel 2 und 3 ein Flachbackenbereich 9 ausgeformt sein.

Gelenknah kann das Zangenmaul 8 einen Schneidbereich 12 aufweisen, mit einer ersten Schneide 13 an dem ersten Zangenschenkel 2 und einer zweiten Schneide 14 am zweiten Zangenschenkel 3.

Zwischen dem Schneidbereich 12 und dem Flachbackenbereich 9 kann gemäß dem ersten Ausführungsbeispiel weiter ein Abisolierbereich 10 vorgesehen sein, aufweisend Schneidausbildungen 11 mit unterschiedlichen Durchmessern, zur Ermöglichung der Abisolierung von Drähten unterschiedlicher Querschnitte.

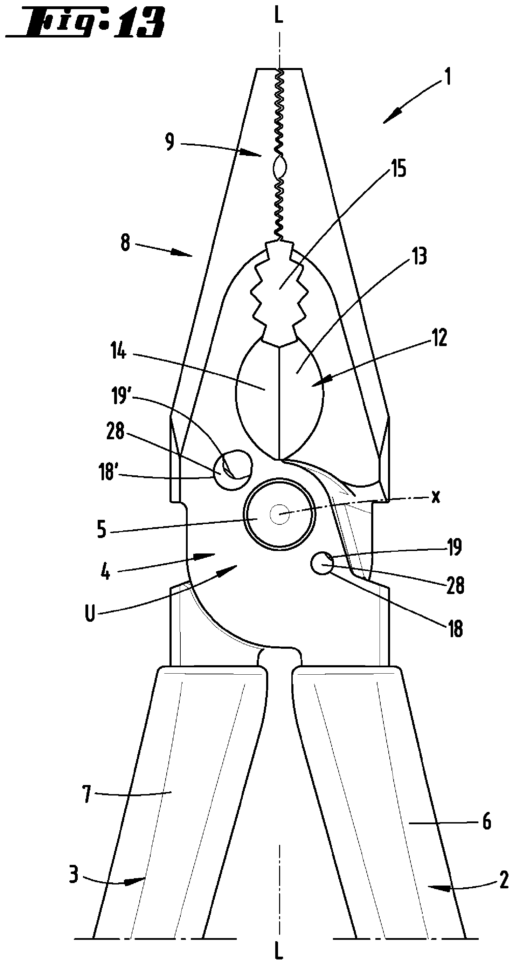

Gemäß den Darstellungen in den Figuren 13 bis 16 kann die Zange 1 auch beispielsweise gemäß Figur 13 als sogenannte Kombinationszange ausgebildet sein, mit einem Schneidbereich 12 und einem Flachbackenbereich 9 sowie einem zwischen diesen Bereichen ausgebildeten Brennerloch 15.

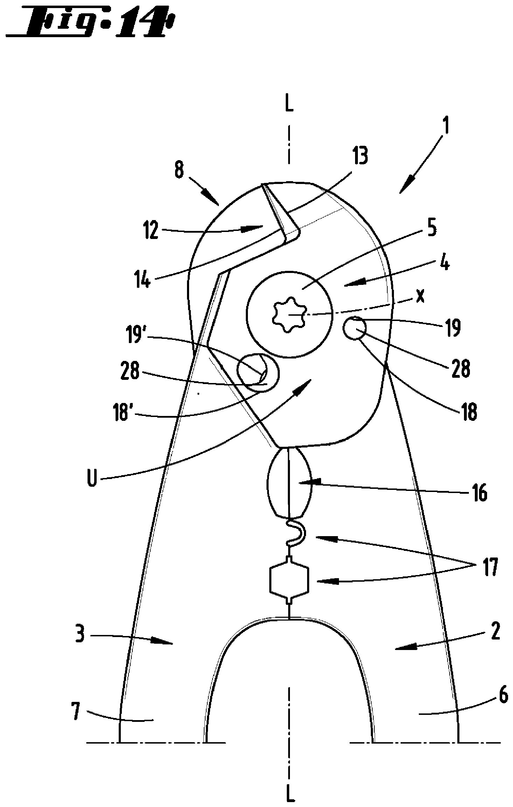

Darüber hinaus kann gemäß der Darstellung in Figur 14 die Zange 1 auch in Art einer Drahtseilschere ausgebildet sein, mit einem bezüglich der Drehachse x den Griffbereichen 6 und 7 gegenüberliegenden ersten Schneidbereich 12 und einem gelenknah zwischen den Griffbereichen 6 und 7 ausgebildeten zweiten Schneidbereich 16. Darüber hinaus können bei dieser Ausgestaltung entlang der Längsachse L-L folgend mehrere, hier zwei Crimpbereiche 17 vorgesehen sein.

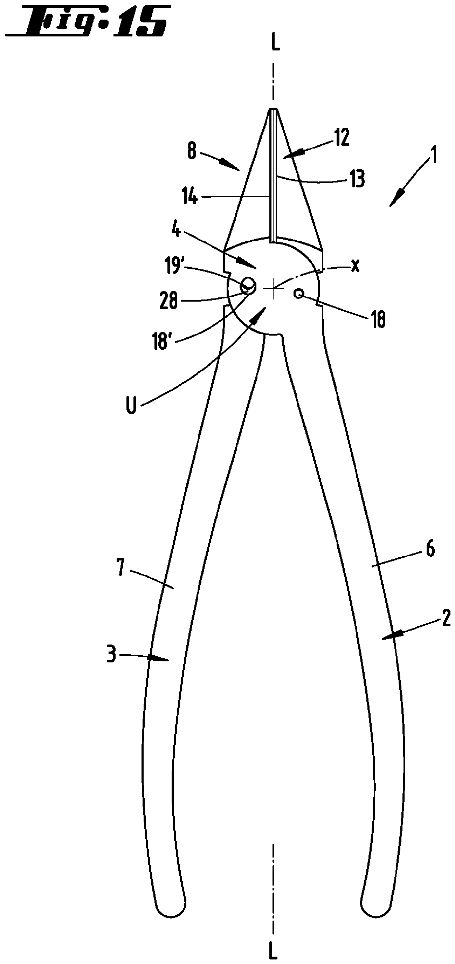

Figur 15 zeigt eine Zange 1 in Form einer Schneidzange, entsprechend aufweisend einen Schneidbereich 12.

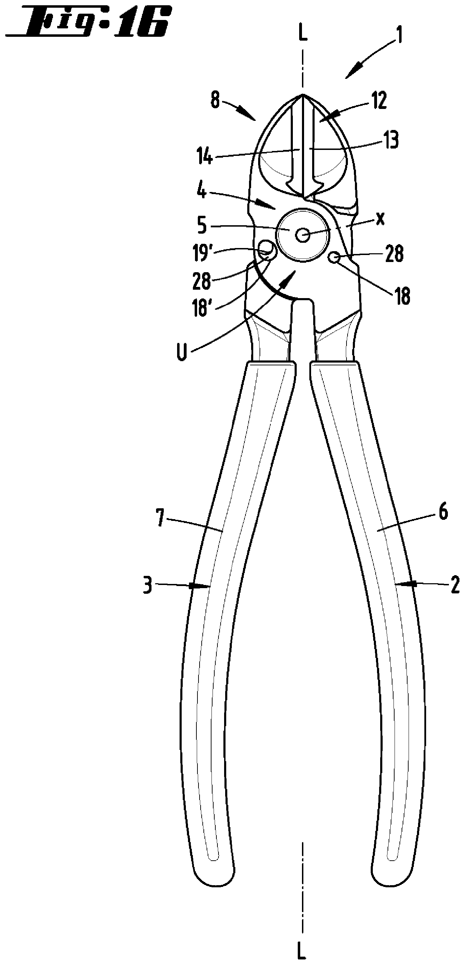

Eine Zange 1 in Art eines Seitenschneiders zeigt die Figur 16.

Darüber hinaus kann die Zange 1 auch in Art jeder Greifzange, Mitten- oder Vornschneider-, Abisolierzange, Kabelzange, Crimpzange oder auch Abmantelungszange ausgebildet sein. Insbesondere kann die Zangen 1 in Art einer Zange oder Schere ausgebildet sein, bei welcher die Zangenschenkel 2 und 3 sich in jeder Zangenschenkel-Schwenkstellung in dem Gelenkbereich 4 überdecken.

In einem Überdeckungsbereich U der Zangenschenkel 2 und 3, der im Wesentlichen dem Gelenkbereich 4 entspricht, ist jeder Zangenschenkel 2, 3 in den dargestellten Ausführungsbeispielen mit bohrungsartigen Ausnehmungen versehen, die den jeweiligen Zangenschenkel 2, 3 in Dickenrichtung, d.h. im Wesentlichen in Erstreckungsrichtung der Drehachse x, vollständig durchsetzen.

Die beiden ersten Ausnehmungen 18 und 18' im ersten Zangenschenkel 2 liegen mit Bezug auf einen Grundriss, beispielsweise gemäß der Darstellung in Figur 2, wie auch die beiden zweiten Ausnehmungen 19 und 19' im zweiten Zangenschenkel 3, in etwa in diametraler Gegenüberlage, bezogen auf die Drehachse x. Weiter sind diese Ausnehmungen 18,18' und 19, 19' radial außerhalb, jedoch benachbart zu dem Gelenkbolzen 5 vorgesehen.

Mit Verschwenken eines Zangenschenkels 2, 3 bewegen sich die in diesen ausgebildeten Ausnehmungen 18, 18' und 19, 19' entlang einer sich auf die Drehachse x beziehenden Kreislinie.

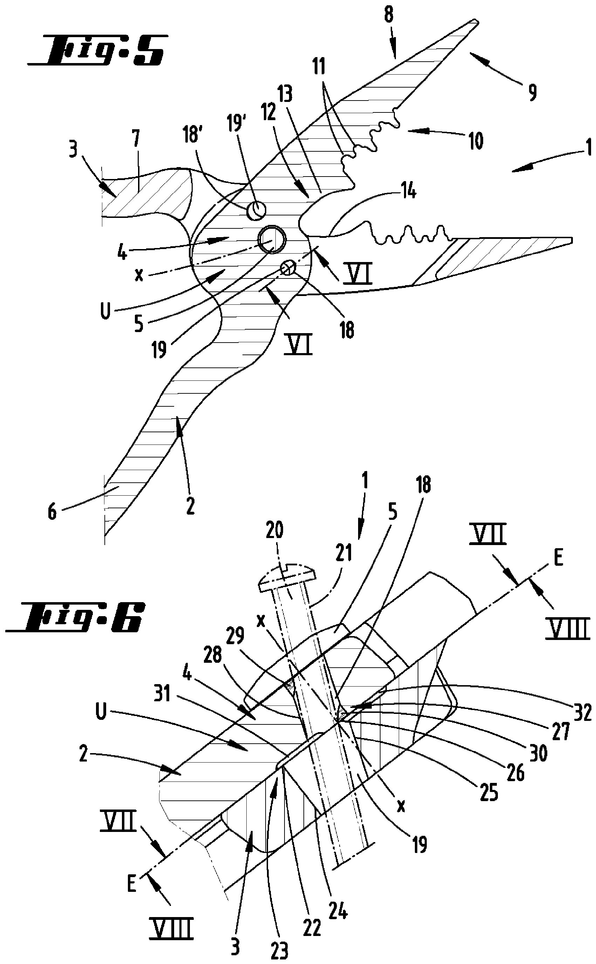

Die Ausnehmungen 18 und 19 sind, wie auch die weiteren Ausnehmungen 18' und 19', durch entsprechendes Verschwenken der Zangenschenkel in eine im Wesentlichen in Erstreckungsrichtung der Drehachse x gerichtete, im Wesentlichen fluchtende Übereinanderlage bringbar. Dies ist in dem dargestellten Ausführungsbeispiel, wie auch bevorzugt, eine Zangenmaul-Offenstellung gemäß den Darstellungen in den Figuren 5 und 6.

In dieser Zangenmaul-Offenstellung beziehungsweise in dieser Überdeckungsstellung von erster Ausnehmung 18, 18' und zweiter Ausnehmung 19, 19' kann durch diese Ausnehmungen ein abzulängender Bolzen 20, ausgehend von der freien Oberfläche des ersten Zangenschenkels 2, durchgesteckt werden. Das freie Ende des Bolzens 20 kann unterseitig des zweiten Zangenschenkels 3 durch die hier vorgesehene zweiten Ausnehmungen 19,19' auftauchen oder sich im Bereich der Ausnehmung 19 beziehungsweise 19' erstrecken.

Die Ausbildung und Anordnung der Ausnehmungen dient zum Abscheren eines Bolzens 20, weiter beispielsweise eines Bolzens 20 mit einem Außengewinde 21. Die Scher- bzw. Trennebene E erstreckt sich zwischen den aufeinander liegenden planen Flächen der Zangenschenkel 2 und 3 im Gelenkbereich 4, wobei die Trennebene E zugleich auch die Schneidebene des Schneidbereiches 12, sofern vorhanden, bildet. Die Trennebene E erstreckt sich demnach senkrecht zur Drehachse x.

Die Ausnehmungspaare 18,19 und 18', 19' sind bezüglich ihrer jeweiligen Querschnittsausgestaltung angepasst zum Abscheren von Bolzen unterschiedlicher Durchmesser.

Die Ausnehmungen eines Ausnehmungs-Paares (18 und 19 beziehungsweise 18' und 19') sind darüber hinaus unterschiedlich gestaltet.

So öffnet sich die zweite Ausnehmung 19 beziehungsweise 19' des zweiten Zangenschenkels 3 mit Bezug auf einen Querschnitt gemäß Figur 6, in welchem Querschnitt sich die Drehachse x als Linie darstellt, ausgehend von der freien Außenfläche des zweiten Zangenschenkels 3 in Richtung der Trennebene E sich trichterförmig erweiternd. Hierbei verläuft eine, in der Trennebene E im Wesentlichen die zugehörige Randkante 22 im zweiten Abscherbereich 23 bildende erste Innenkante 24, im Wesentlichen in paralleler Ausrichtung zur Drehachse x beziehungsweise in senkrechter Ausrichtung zur Trennebene E, während die in diesem Schnitt im Wesentlichen gegenüberliegende zweite Innenkante 25 einen spitzen Winkel a von etwa 15 bis 20° zu der Drehachse x beziehungsweise einer Parallelen zur Drehachse x einschließt. Diese zweite Innenkante 25 ist im Wesentlichen der Randkante 26 im ersten Abscherbereich 27 der zugeordneten ersten Ausnehmung 18 beziehungsweise 18' zugewandt.

Die erste Ausnehmung 18 beziehungsweise 18' weist zunächst und im Wesentlichen eine zylindrische Innenfläche 28 auf, mit einer Zylinderlängsachse y, die ebenfalls einen spitzen Winkel β zu der Drehachse x einschließt und so entsprechend wie auch die zweite Innenkante 25 der zweiten Ausnehmungen 19 beziehungsweise 19' spitzwinklig ausgerichtet verläuft zu der Trennebene E.

Das quer zur Zylinderlängsachse y betrachtete Durchmessermaß im Bereich der zylindrischen Innenfläche 28 kann etwa dem 0,4- bis 0,7-Fachen, weiter etwa dem 0,5-Fachen des in einem Querschnitt gemäß Figur 6 betrachteten Öffnungsmaßes der zweiten Ausnehmung 19 beziehungsweise 19' im Bereich der Trennebene E entsprechen.

Die erste Ausnehmung 18 beziehungsweise 18' weist darüber hinaus zwei über die Höhe h der ersten Ausnehmung 18 beziehungsweise 18' zueinander distanzierte und umfangsmäßig im Wesentlichen gegenüberliegende Gewindeausformungen 29 und 30 auf. Eine Gewindeausformung 29 ist dem Austrittsbereich der ersten Ausnehmung 18 beziehungsweise 18' zugewandt ausgebildet, während die zweite Gewindeausformung 30 endseitig der ersten Ausnehmung 18, 18' im Bereich der Trennebene E ausgeformt ist.

Bezogen auf einen jeweiligen Gewindegrund verlaufen die Gewindeausformungen 29 und 30 im Wesentlichen in Ausrichtung der Drehachse x und somit im Wesentlichen in senkrechter Ausrichtung zur Trennebene E.

Der freie Innendurchmesser der ersten Ausnehmung 18,18' im Bereich der zylindrischen Innenfläche 28 kann um einen Faktor von etwa 1,1 bis 1,2 größer gewählt sein, als der Außendurchmesser des abzuscherenden Bolzens 20. Letzterer kann, insbesondere bei Ausbildung desselben als Schraubbolzen, wie dies auch in den Darstellungen gezeigt ist, zum Ablängen zunächst in einer spitzwinkligen Ausrichtung zu der Trennebene E in das in Übereinanderlage gebrachte Ausnehmungspaar gesteckt werden (vergleiche Figur 6). Zufolge dieser spitzwinkligen Ausrichtung des Bolzens 20 relativ zu der Trennebene E ist ein einfaches Durchstecken auch durch die, die Gewindeausformungen 29 und 30 aufweisende erste Ausnehmung 18 beziehungsweise 18' ermöglicht, da diese Gewindeausformungen 29 und 30 zufolge der spitzwinkligen Ausrichtung des Bolzens 20 (zunächst) nicht in Eingriff gelangen.

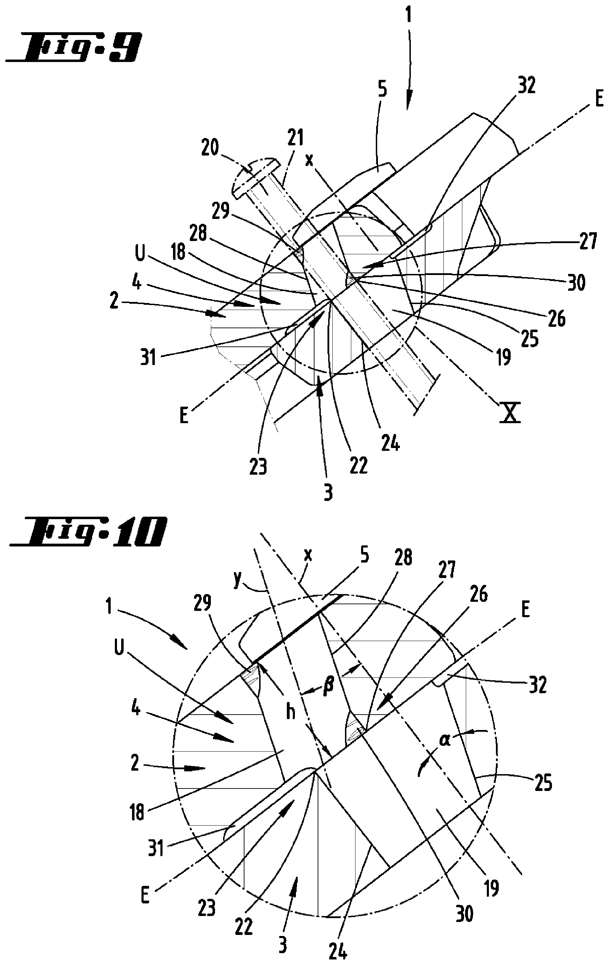

Anschließend wird der Bolzen 20 händisch oder allein zufolge entsprechender Verschwenkung der Zangenschenkel 2 und 3 in Richtung auf eine Zangenmaul-Schließstellung aufgerichtet in eine senkrecht zur Trennebene E gerichtete Stellung gemäß der Darstellung in Figur 9. In dieser Stellung stützt sich der Bolzen 20 zufolge Eingriff dessen Außengewindes im Bereich der Gewindeausformungen 29 und 20 ab, während der weitere Außengewindeabschnitt des Bolzens 20 sich frei innerhalb der Ausnehmung 18 beziehungsweise 18' erstreckt. Die Abstützung im Bereich der ersten Ausnehmung 18 beziehungsweise 18' ist bevorzugt allein im Bereich der Gewindeausformungen 29 und 30 erreicht.

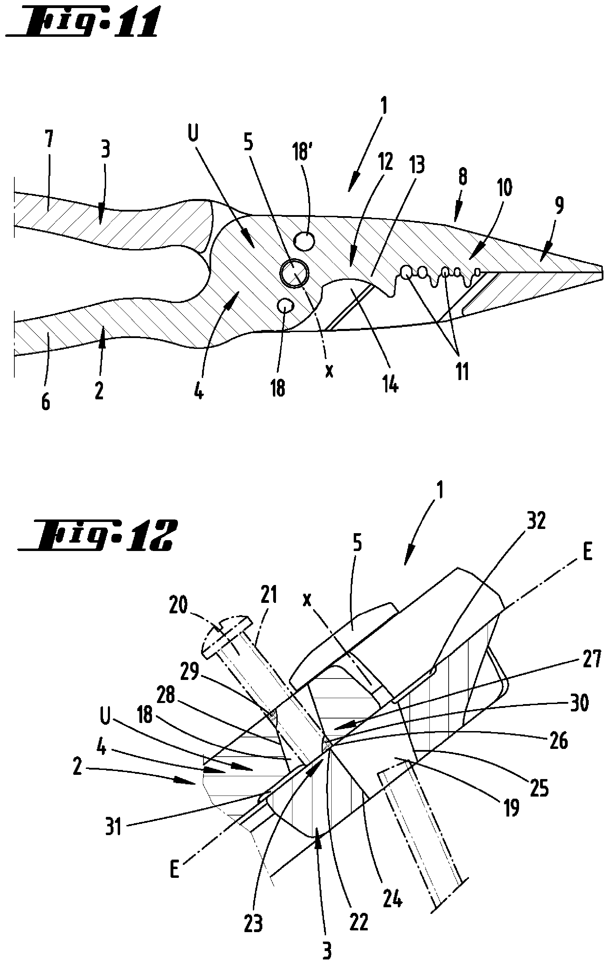

Im Zuge der weiteren Verlagerung der Zangenschenkel 2 und 3 erreicht der Bolzen 20 weiter eine Stellung, in welcher der abzulängende Teil des Bolzens 20 mit Bezug auf einen Querschnitt gemäß Figur 9 in Anlage tritt zu der ersten Innenkante 24 im Bereich der zweiten Ausnehmung 19 beziehungsweise 19'. Diese Anlage unterstützt weiter die senkrecht zur Trennebene E gerichtete Ablängstellung des Bolzens 20, so dass im Zuge der weiteren Schwenkverlagerung der Zangenschenkel 2 und 3 ein Abscheren des Bolzens 20 im Bereich der Trennebene E durch Aufeinanderzufahren der die Scherkanten bildenden Randkanten 22 und 26 durchgeführt werden kann. Die sich hiernach ergebende Schnittfläche am Bolzen 20 ist im Wesentlichen senkrecht ausgerichtet zur Bolzenlängsachse (vergleiche Figuren 11 und 12).

Der Gewindeauslauf der Gewindeausformung 30 in die zugehörige Randkante 26 im ersten Abscherbereich 27 ist scharfkantig. Eine scharfkantige Randkante 26 verhindert die Gratbildung am Bolzen 20 bei einem Abscheren.

Im Zuge der Nutzung der Zange 1 zum Abscheren von Bolzen 20 oder dergleichen kann es im Laufe der Zeit zu einem Schneidenaufwurf im Bereich der auf den abzuscherenden Bolzen 20 einwirkenden Randkanten 22 und/oder 26 kommen. Um diesbezüglich eine langlebige Zange 1 anzubieten, sind zugeordnet den Randkanten 26 und 22, mit Bezug auf die Trennebene E gegenüberliegend, Vertiefungen 31 und 32 in dem jeweiligen Zangenschenkel 2, 3 vorgesehen. Jede Vertiefung 31, 32 ist im Wesentlichen langlochartig gebildet und erstreckt sich - bezogen auf die Drehachse x - entlang einer Kreislinie. Die Randkante 22 beziehungsweise 26 bewegt sich zumindest außerhalb der gegenüberliegenden Ausnehmung 18,19 beziehungsweise 18', 19' im Zuge der Zangenschenkel-Schwenkbewegung im Bereich der gegenüberliegenden Vertiefung 31 beziehungsweise 32.

Die in Erstreckungsrichtung der Drehachse x betrachtete Tiefe einer jeden Vertiefung 31, 32 kann einem Hundertstel bis einem Zehntel der Höhe h der ersten Ausnehmung 18 beziehungsweise 18' entsprechen.

Zufolge dieser Ausgestaltung liegen die die Schneidkanten bildenden Randkanten 22 und 26 in jeder Zangenschenkel-Schwenkstellung frei.

Die Ausnehmungen eines Ausnehmungs-Paares können darüber hinaus so positioniert sein, dass die diesbezüglichen schneidenden Randkanten 22 und 26 bei geschlossener Zangen 1 nicht vollständig übereinander gefahren sind oder aufeinandertreffen. Vielmehr verbleiben bei einer solchen Ausgestaltung die Randkanten 22 und 26 in der Zangen-Schließstellung in einer Position, in welcher diese geringfügig noch auf Abstand sind. Dieser Abstand kann einem bis wenige Zehntelmillimeter betragen, so dass dennoch auch Bolzen aus einem zähen Werkstoff, wie beispielsweise Edelstahl, noch vollständig durchtrennt werden.

Weiter bevorzugt sind insbesondere die Randkanten 22 und 26 gehärtet, bevorzugt lasergehärtet, was eine gute Verschleißfestigkeit bei geringer Ausbruchgefahr der Randkanten 22 und 26 ermöglicht.

**Liste der Bezugszeichen**

| | | | |
|---|---|---|---|
| 1 | Zange | 25 | zweite Innenkante |
| 2 | erster Zangenschenkel | 26 | Randkante |
| 3 | zweiter Zangenschenkel | 27 | erster Abscherbereich |
| 4 | Gelenkbereich | 28 | Innenfläche |
| 5 | Gelenkbolzen | 29 | Gewindeausformung |
| 6 | Griffbereich | 30 | Gewindeausformung |
| 7 | Griffbereich | 31 | Vertiefung |
| 8 | Zangenmaul | 32 | Vertiefung |
| 9 | Flachbackenbereich | | |
| 10 | Abisolierbereich | | |
| 11 | Schneidausbildung | | |
| 12 | Schneidbereich | h | Höhe |
| 13 | erste Schneide | x | Drehachse |
| 14 | zweite Schneide | y | Zylinderlängsachse |
| 15 | Brennerloch | | |
| 16 | Schneidbereich | | |
| 17 | Crimpbereich | | |
| 18 | erste Ausnehmung | E | Scher-/Trennebene |
| 18' | erste Ausnehmung | L | Längsachse |
| 19 | zweite Ausnehmung | U | Überdeckungsbereich |
| 19' | zweite Ausnehmung | | |
| 20 | Bolzen | | |
| 21 | Außengewinde | α | Winkel |
| 22 | Randkante | β | Winkel |
| 23 | zweiter Abscherbereich | | |
| 24 | erste Innenkante | | |

## Patentansprüche

1. Zange (1) mit einem ersten und einem zweiten Zangenschenkel (2, 3), die in einem Gelenkbereich (4) um eine Drehachse (x) drehbar zueinander gehaltert sind und auf einer Seite des Gelenkbereiches (4) Griffbereiche (6, 7) ausbilden sowie auf der anderen Seite ein Zangenmaul (8), wobei die Zangenschenkel (2, 3) in einem Überdeckungsbereich (U) durch in fluchtender Übereinanderlage bringbare erste und zweite Ausnehmungen (18, 18', 19, 19'), wobei jedenfalls in einer ersten Ausnehmung (18, 18') eine Gewindeausformung (29, 30) vorgesehen ist, zum Abscheren eines Gewindebolzens (20) ausgebildet sind, wobei die Gewindeausformung (29, 30) nur über einen Teil der Höhe (h) ausgebildet ist und die erste Ausnehmung (18, 18') mit einer zylindrischen Innenfläche (28) ausgebildet ist, wobei eine Zylinderlängsachse (y) der Innenfläche (28) mit der Drehachse (x) einen spitzen Winkel einschließt, **dadurch gekennzeichnet, dass** zwei umfangsmäßig gegenüberliegende und höhenmäßig versetzte Gewindeausformungen (29, 30) vorgesehen sind, dass die Gewindeausformungen (29, 30) nur über einen Teil des inneren Umfangs der ersten Ausnehmung (18, 18') ausgebildet sind und dass die Gewindeausformungen (29, 30) bezüglich eines Gewindegrundes in Ausrichtung der Drehachse (x) verlaufen.

2. Zange nach Anspruch 1, **dadurch gekennzeichnet, dass** die zweite Ausnehmung (19, 19') zwei in einem Querschnitt unterschiedlich zueinander verlaufende Innenkanten (24, 25) aufweist.

3. Zange nach Anspruch 2, **dadurch gekennzeichnet, dass** eine erste Innenkante (24) in einer Projektion in Ausrichtung der Drehachse (x) verläuft und dass eine zweite Innenkante (25) einen spitzen Winkel (a) von 10 bis 30° zu der Drehachse (x) einschließt.

4. Zange nach einem der vorhergehenden Ansprüche, **dadurch gekennzeichnet, dass** die zweite Ausnehmung (19, 19') frei von Gewindeausformungen ist.

5. Zange (1) nach einem der vorhergehenden Ansprüche, **dadurch gekennzeichnet, dass** beide Ausnehmungen (18, 18', 19, 19') bezogen auf einen Querschnitt gegenüberliegend zu einem Abscherbereich (23, 27) einer Randkante (22, 26) der anderen Ausnehmung mit einer entlang einer Trennebene (E) ausgerichteten Vertiefung (31, 32) versehen sind und dass die Vertiefungen (31, 32) bezogen auf einen Querschnitt gegenüberliegend ausgebildet sind, so dass die Schneidkanten bildende Randkanten (22, 26) der Ausnehmungen (18, 18', 19,19') in jeder Zangenschenkel-Schwenkstellung freiliegen.

6. Zange nach Anspruch 5, **dadurch gekennzeichnet, dass** die Vertiefungen (31, 32) langlochartig gebildet sind.

7. Zange nach Anspruch 6, **dadurch gekennzeichnet, dass** sich die Vertiefungen (31, 32) bezogen auf die Drehachse (x) entlang einer Kreislinie erstrecken.

## Claims

1. Pliers (1) with a first and a second pliers leg (2, 3), which are mounted in a joint region (4) so as to be rotatable relative to one another about an axis of rotation (x) and form grip regions (6, 7) on one side of the joint region (4) and a pliers jaw (8) on the other side, wherein the pliers legs (2, 3) being formed in an overlap region (U) by first and second recesses (18, 18', 19,19') which can be brought into alignment one above the other, a threaded formation (29, 30) being provided in any case in a first recess (18, 18'), for shearing off a threaded bolt (20), the threaded formation (29, 30) only extending over part of the height (h) and the first recess (18, 18') being formed with a cylindrical inner surface (28), a longitudinal cylinder axis (y) of the inner surface (28) forming an acute angle with the axis of rotation (x), **characterized in that** that two circumferentially opposed and vertically offset thread formations (29, 30) are provided, that the thread formations (29, 30) are formed only over a part of the inner circumference of the first recess (18, 18') and that the thread formations (29, 30) extend with respect to a thread root in alignment with the axis of rotation (x).

2. Pliers according to claim 1, **characterized in that** the second recess (19, 19') has two inner edges (24, 25) extending differently from one another in a cross-section.

3. Pliers according to claim 2, **characterized in that** a first inner edge (24) extends in a projection in alignment with the axis of rotation (x) and **in that** a second inner edge (25) encloses an acute angle (α) of 10 to 30° to the axis of rotation (x).

4. Pliers according to one of the preceding claims, **characterized in that** the second recess (19, 19') is free of thread formations.

5. Pliers (1) according to one of the preceding claims, **characterized in that** both recesses (18, 18', 19,19') are provided with a depression (31, 32) aligned along a parting plane (E) opposite a shearing-off region (23, 27) of a marginal edge (22, 26) of the other recess with respect to a cross-section, 32) aligned along a parting plane (E), and **in that** the recesses (31, 32) are formed opposite one another with respect to a cross section, so that the marginal edges (22, 26) of the recesses (18, 18', 19, 19') which form the cutting edges are exposed in each pliers leg pivot position.

6. Pliers according to claim 5, **characterized in that** the recesses (31, 32) are formed in the manner of elongated holes.

7. Pliers according to claim 6, **characterized in that** the recesses (31, 32) extend along a circular line with respect to the axis of rotation (x).

## Revendications

1. Pince (1) avec une première et une deuxième branche de pince (2, 3), qui sont maintenues dans une zone d'articulation (4) de manière à pouvoir tourner l'une par rapport à l'autre autour d'un axe de rotation (x) et qui forment d'un côté de la zone d'articulation (4) des zones de préhension (6, 7) ainsi que de l'autre côté une mâchoire de pince (8), les branches de pince (2, 3) sont formés dans une zone de recouvrement (U) par des premiers et deuxièmes évidements (18, 18', 19,19') pouvant être amenés en superposition alignée, une formation de filetage (29, 30) étant prévue en tout cas dans un premier évidement (18, 18'), pour cisailler un boulon fileté (20), la formation de filetage (29, 30) n'est réalisé que sur une partie de la hauteur (h) et le premier évidement (18, 18') est réalisé avec une surface intérieure cylindrique (28), un axe longitudinal cylindrique (y) de la surface intérieure (28) formant un angle aigu avec l'axe de rotation (x), **caractérisé, en ce qu'**il est prévu deux formations de filetage (29, 30) opposées sur la circonférence et décalées en hauteur, **en ce que** les formations de filetage (29, 30) ne sont formées que sur une partie de la circonférence intérieure du premier évidement (18, 18') et **en ce que** les formations de filetage (29, 30) s'étendent par rapport à un fond de filet en alignement avec l'axe de rotation (x).

2. Pince selon la revendication 1, **caractérisée en ce que** le deuxième évidement (19, 19') présente deux arêtes intérieures (24, 25) s'étendant différemment l'une de l'autre dans une section transversale.

3. Pince selon la revendication 2, **caractérisée en ce qu'**un premier bord interne (24) s'étend en projection dans l'alignement de l'axe de rotation (x) et **en ce qu'**un deuxième bord interne (25) forme un angle aigu (a) de 10 à 30° avec l'axe de rotation (x).

4. Pince selon l'une quelconque des revendications précédentes, **caractérisée en ce que** le deuxième évidement (19, 19') est dépourvu de formations filetées.

5. Pince (1) selon l'une des revendications précédentes, **caractérisée en ce que** les deux évidements (18, 18', 19,19') sont pourvus d'un creux (31,31') orienté le long d'un plan de séparation (E), opposé par rapport à une section transversale à une zone de cisaillement (23, 27) d'un bord (22, 26) de l'autre évidement, 32) et **en ce que** les renfoncements (31, 32) sont réalisés de manière opposée par rapport à une section transversale, de sorte que les bords (22, 26) des évidements (18, 18', 19, 19') formant les arêtes de coupe sont dégagés dans chaque position de pivotement des branches de la pince.

6. Pince selon la revendication 5, **caractérisée en ce que** les cavités (31, 32) sont formées à la manière de trous oblongs.

7. Pince selon la revendication 6, **caractérisée en ce que** les cavités (31, 32) s'étendent le long d'une ligne circulaire par rapport à l'axe de rotation (x).
